# EUROPEAN PATENT APPLICATION

(11) **EP 3 623 614 A1**
(43) Date of publication of application: **18.03.2020**
(21) Application number: 18193810.1
(22) Date of filing: 11.09.2018
(51) Int. Cl.: F03D 1/06

(54) **A SHEAR WEB WITH A CORE FOR A WIND TURBINE BLADE**

(71) Applicant: LM Wind Power International Technology II ApS, 6000 Kolding (DK)
(72) Inventor: Madsen, Kristian, Lehmann, 6000 Kolding (DK); Koefoed, Michael, 6000 Kolding (DK); Thuesen, Jesper, 6000 Kolding (DK)
(74) Representative: COPA Copenhagen Patents

(57) **Abstract**

The present invention relates to a shear web (50) for a wind turbine blade, the shear web (50) comprising a web body and a first web foot flange at a first end of the web body and a second web foot flange at a second end of the web body, wherein the web body comprises a first web skin and a second web skin, each web skin comprising one or more fibre layers, and a core member (51) sandwiched in between the first and second web skins. The core member (51) comprises a plurality of grooves (80) provided in its top surface and in its bottom surface and extending in its longitudinal direction.

## Description

### Field of the Invention

The present invention relates to a shear web for a wind turbine blade, to a wind turbine blade comprising the shear web and to a method of manufacturing a shear web for a wind turbine blade.

### Background of the Invention

Wind turbine blades are usually manufactured by forming two shell parts from layers of woven fabric and resin. Spar caps or main laminates are placed or integrated in the shell parts and are combined with shear webs to form a structural support member. Spar caps or main laminates may be joined to, or integrated within, the inside of the suction and pressure halves of the shell. The shear webs and spar caps or main laminates typically extend spanwise along the inside of the blade and are often I-shaped. An additional trailing edge shear web may also be incorporated into the blade.

The main laminates typically comprise a high number of fibre layers compared to the remainder of the blade and may form a local thickening of the wind turbine shell, at least with respect to the number of fibre layers. Thus, the main laminate may form a fibre insertion in the blade. In this design, the main laminates constitute the load carrying structure. The blade shells are typically designed with a first main laminate integrated in the pressure side shell part and a second main laminate integrated in the suction side shell part. The first main laminate and the second main laminate are typically connected via one or more shear webs, which for instance may have a C-shaped or I-shaped cross-section. For very long blades, the blade shells may further along at least a part of the longitudinal extent comprise an additional first main laminate in the pressure side shell, and an additional second main laminate in the suction side shell. These additional main laminates may also be connected via one or more shear webs. This design has the advantage that it is easier to control the aerodynamic shape of the blade via the moulding of the blade shell part.

The shear webs act to reinforce the blade structure, and prevent excessive bending or buckling. Some blade designs use shear webs formed from beam members having I- or C-shaped cross-sections, the members having a main body with load-bearing flanges extending therefrom at opposed ends of the main body.

One method of manufacturing such I- or C-webs is through the provision of a sandwich panel body to which layers of fibre material are applied at the opposed ends in the shape of the desired flanges, the fibre material being infused with a resin and subsequently cured to form rigid flanges.

It is also known to manufacture such shear webs in a suitably shaped mould structure, wherein a C-web can be manufactured using a relatively simple U-shaped mould, where the sandwich panel body extends between opposed walls of the mould structure, with the flanges formed through the layup of fibre material against the said walls.

Similarly, an I-web can be manufactured using a mould having a central support bounded by flexible support members on either side to define an adjustable void between the flexible support members and the opposed mould walls. In this situation, the sandwich panel body is arranged on the central support, while the adjustable void is arranged to receive fibre layers to form the flanges on a first side of the panel body, with the flanges on the second side of the panel body formed by the layup of fibre material against the opposed mould walls.

Forming shear webs often comprises arranging a core material, such as balsawood or foamed polymer, in a mould structure. However, correctly fitting such core material in the mould or within a surrounding fibre structure is often a tedious and lengthy process, which may account for a significant portion of cycle time for shear web moulding.

It is therefore an object of the present invention to provide a method for forming a shear web for a wind turbine blade, which is more efficient and takes less time.

It is a further object of the present invention to provide a method for forming a shear web for a wind turbine blade, which is simple and cost-effective.

It is another object of the present invention to provide a method for forming a shear web for a wind turbine blade, which is flexible and applicable to a number of different moulding situations.

### Summary of the Invention

It has been found that one or more of the aforementioned objects can be obtained by a shear web for a wind turbine blade, the shear web comprising a web body, and preferably a first web foot flange at a first end of the web body and preferably a second web foot flange at a second end of the web body, wherein the web body comprises a first web skin and a second web skin, each web skin comprising one or more fibre layers, a core member sandwiched in between the first and second web skins, the core member extending in a longitudinal direction and having a planar lower surface, a planar upper surface opposite to said lower surface and left and right opposing lateral surfaces interconnecting said lower and upper surfaces, wherein the core member comprises a plurality of grooves provided in the top surface and in the bottom surface and extending in the longitudinal direction of the core member.

The present inventors have found that this arrangement results in a considerably quicker process of fitting core members, such as foamed core members, during shear web manufacturing since the core members of the present invention are particularly flexible and partly compressible, in particular in the regions in which the grooves are provided. Typically, shear web moulds are used that have fixed sides, thus necessitating the precise fitting of foam or balsawood core members in such fixed spaces. Even if manufacturing tolerances result in, for example, slightly too wide core members or slightly too narrow shear web moulds, the core members of the present invention may still be fittingly arranged within such moulds in a quick and efficient way.

It was found that manufacturing a shear web according to the present invention saves around 1-2 hours in cycle time depending on the blade size. In the manufacturing of wind turbine blades, typically one mould for manufacturing a shear web is used in combination with 1 or 2 moulds for manufacturing a wind turbine shell. Manufacturing a shear web according to the present invention was found to improve process efficiency such that one mould for manufacturing a shear web may be used in combination with 2 or 3 moulds for manufacturing a wind turbine shell.

Preferably, the shear web of the present invention is substantially I-shaped. Alternatively, the shear web may be substantially C-shaped. The core member will usually comprise a foamed polymer and/or balsa wood, and the web skins will typically comprise glass fibres, aramid fibres, carbon fibres or combinations thereof. Preferably, the web skins comprise, or consists of, glass fibres. Typically, the shear web is an elongated element. The shear web body is usually an elongated body that - when mounted in the wind turbine blade shell - extends in the longitudinal direction of the wind turbine blade and may have a length of 30 metres or more. The core member will usually have a substantially planar lower surface and a substantially planar upper surface opposite to said lower surface. The core member will usually also comprise an anterior surface and an opposing posterior surface. In some embodiments, the core member has a length of at least 5 meters, such as at least 10 meters or at least 20 meters. In a preferred embodiment, the core member has a length of at least 30 meters.

The shear web of the present invention will typically be manufactured using a shear web mould system comprising a central moulding portion for forming at least a part of the web body, a first moulding plate for forming at least a part of the first web foot flange, and a second moulding plate for forming at least a part of the second web foot flange. Preferably, the angles of the first moulding plate and the second moulding plate relative to the central moulding portion are adjustable. The mould cavity of the mould system may be sealed by at least one vacuum bag. The vacuum bag may be placed at least on top of the array of fibre layers and core member that has been arranged on the central moulding portion. The mould cavity prior to supplying resin may be evacuated by use of a vacuum source. Thus, the shear web of the present invention may be manufactured via a Vacuum Assisted Resin Transfer Moulding (VARTM) process. Alternatively, an RTM process could be used, wherein resin is injected into the mould cavity by use of over-pressure.

In some embodiments, at least one groove is provided in the top surface and at least one groove is provided in the bottom surface of the core member. In other embodiments, at least one groove is provided in the top surface and at least two grooves are provided in the bottom surface of the core member. In other embodiments, at least two grooves are provided in the top surface and at least one grooves is provided in the bottom surface of the core member. In a preferred embodiment, at least two grooves, such as at least three or at least four grooves, are provided in the top surface and at least two grooves, such as at least three or at least four grooves, are provided in the bottom surface of the core member, preferably provided in the vicinity of each of the left and right lateral surfaces, such as not further than 100 cm, such as not further than 70 cm, or not further than 50 cm or 30 cm from the left or right lateral surface.

It is preferred that the grooves extend substantially parallel to each other. In a particularly preferred embodiment, the grooves extend substantially parallel to each of the left and right lateral surfaces. It was found that such arrangements result in particularly flexible core members.

According to another embodiment, the grooves are arranged in an alternating pattern such that a groove in the top surface of the core member is followed by an adjacent groove in the bottom surface of the core member and vice versa, as seen in the width direction of the core member. In other embodiments, two grooves in the top surface are followed by two grooves in the bottom surface, or vice versa. Also, it is preferred that the grooves do not intersect.

The core member may have a width in the range of 50 mm to 10 meters, preferably, 100 mm to 5 meters. The width of the core member may vary over its length. The core member will typically extend over the entire length of the blade. Thus, the length of the core member may be at least 30 m, such as at least 50 m, or at least 70 m.

In some embodiments, the grooves are spaced not more than 150 cm, 100 cm, 70 cm, 50 cm or 30 cm from one of the respective lateral surfaces of the core member. In a preferred embodiment, the grooves are spaced not more than 150 mm, 100 mm, 50 mm or 25 mm from one of the respective lateral surfaces of the core member. According to another embodiment, the grooves extend throughout the entire length of the core member. According to some embodiments, the grooves may have a depth of at least 50%, preferably at least 70 %, 80% or 90% of the thickness of the core member.

Usually, the thickness of the core member may be in the range from 10 mm to 100 mm, preferably 20-75 mm. Thus, the grooves may have a depth in the range of below 10 mm to below 100 mm, such as a range of 9-90 mm, or 8-80 mm. A preferred range for the depth of the grooves is 18-50 mm.

In one embodiment, the grooves are provided as a first set of grooves, wherein the first set of grooves is provided within a left lateral region of the core member extending up to 150 cm, 100 cm, 70 cm, 50 cm or 30 cm inwardly from the left lateral surface. According to another embodiment, the grooves are provided as a first and a second set of grooves, wherein the second set of grooves is provided within a right lateral region of the core member extending up to 150 cm, 100 cm, 70 cm, 50 cm or 30 cm inwardly from the right lateral surface.

Advantageously, grooves are provided in each of the left and right lateral regions of the core member. It is preferred that each of the left and right lateral regions comprises 2-10 grooves, preferably 2-5 grooves, most preferably 2-4 grooves.

According to another embodiment, the grooves have a width of between 1 and 10 mm, preferably between 1 and 5 mm, more preferably between 1 and 3 mm. Preferably, the grooves have a width of not more than 5 mm. In some embodiments, the grooves have a substantially rectangular cross-section. In other embodiments, the grooves have a substantially trapezoid cross-section. It was found that grooves with a substantially trapezoid cross-section, such as an isosceles trapezoid cross-section, may lead to smaller gaps and voids in core members fitted within a shear web mould, and thus to more advantageous resin infused structures with less resin pools. In other embodiments, the grooves have a substantially triangular cross-section.

In a preferred embodiment, the core member has a substantially planar shape. According to another embodiment, the left and right opposing lateral surfaces are curved surfaces. Alternatively, the left and right opposing lateral surfaces may be planar surfaces. This may be advantageous if the core member is used for C-shaped shear webs or for trailing edge inserts of a flatback blade.

It is preferred that the core member comprises a foam material, such as foamed polymer. Useful polymers in this regard include PET, PVC and polyurethane. It is particularly preferred that the core member comprises PET. In a preferred embodiment, the core member consists of a foam material, such as foamed polymer. In other embodiments, the core member comprises or consists of balsawood.

The shear web of the present invention may also comprise one or more inserts to provide a gradual transition from the web body to the first and or the second web foot flange. A first insert may for instance be provided at a first side of the core material and a second insert at a second side of the core material. One or more of the inserts may advantageously be substantially wedge shaped. Thus, the insert may have an overall trapezoid appearance. In an advantageous embodiment, the inserts have a rounded outer surface such that a round transition is obtained from the web body to the web foot flanges.

In another aspect, the present invention relates to a wind turbine blade comprising a shear web according to the present invention.

In yet another aspect, the present invention relates to a method of manufacturing a shear web for a wind turbine blade, the shear web having a web body and preferably a first web foot flange at a first end of the web body and preferably a second web foot flange at a second end of the web body, wherein the method comprises the steps of:
a) providing a web mould part having a moulding surface,
b) arranging one or more fibre layers on the moulding surface for forming a first web skin,
c) arranging a core member on top of the one or more fibre layers,
   the core member extending in a longitudinal direction and having a lower surface, an upper surface opposite to said lower surface and left and right opposing lateral surfaces interconnecting said lower and upper surfaces,
   wherein the core member comprises a plurality of grooves provided in the top surface and in the bottom surface and extending in the longitudinal direction of the core member,
d) arranging one or more fibre layers on top of the core member for forming a second web skin,
e) supplying resin to the mould part, and
e) curing or hardening the resin to form the shear web.

The features and/or embodiments described above with respect to the shear web and its core member according to the present invention apply likewise to the method of manufacturing the shear web according to the present invention.

In another aspect, the present invention relates to a method of manufacturing at least a part of a wind turbine blade comprising manufacturing at least one shear web as described above, and joining said at least one shear web to a second component, such as a blade shell, to form at least a part of a wind turbine blade.

In another aspect, the present invention relates to a trailing edge insert for a wind turbine blade, preferably a wind turbine blade having a flatback profile, the trailing edge insert comprising an insert body comprising a core member, preferably comprising a foam material such as foamed polymer, enclosed by one or more fibre layers, the core member extending in a longitudinal direction and having a lower surface, an upper surface opposite to said lower surface and left and right opposing lateral surfaces interconnecting said lower and upper surfaces, wherein the core member comprises a plurality of grooves provided in the top surface and in the bottom surface and extending in the longitudinal direction of the core member.

The core member of the trailing edge insert may comprise the same features and embodiments as described above for the core member of the shear web. For example, the core member of the trailing edge insert may comprise at least one groove provided in the top surface and at least one groove provided in the bottom surface of the core member, preferably provided in the vicinity of each of the left and right lateral surfaces, such as not further than 150 cm, such as not further than 100 cm or 50 cm from the left or right lateral surface. In other embodiments, the core member of the trailing edge insert may comprise at least two grooves provided in the top surface and at least two grooves provided in the bottom surface of the core member, preferably provided in the vicinity of each of the left and right lateral surfaces, such as not further than 150 cm, such as not further than 100 cm or 50 cm from the left or right lateral surface. The grooves may extend substantially parallel to each other and/or the grooves may extend substantially parallel to each of the left and right lateral surfaces. The core member of the trailing edge insert may comprise grooves that are arranged in an alternating pattern such that a groove in the top surface of the core member is followed by an adjacent groove in the bottom surface of the core member and vice versa, as seen in the width direction of the core member. It is preferred that the grooves do not intersect. In a preferred embodiment, the grooves are spaced not more than 100 cm from one of the respective lateral surfaces of the core member. According to another embodiment, the grooves extend throughout the entire length of the core member. Reference is also made to the other features and embodiments discussed above with respect to the core member of the shear web, which likewise may be applied to the core member of the trailing edge insert.

In another aspect, the present invention relates to a core member for a shear web or a trailing edge insert of a wind turbine blade, the core member extending in a longitudinal direction and having a lower surface, an upper surface opposite to said lower surface and left and right opposing lateral surfaces interconnecting said lower and upper surfaces, wherein the core member comprises a plurality of grooves provided in the top surface and in the bottom surface and extending in the longitudinal direction of the core member, and to the use of the core member for manufacturing a shear web or a trailing edge insert of a wind turbine blade. The features and/or embodiments discussed above with respect to the core member of the shear web may likewise apply to the core member as such. For example, the core member of the trailing edge insert may comprise at least one groove provided in the top surface and at least one groove provided in the bottom surface of the core member, preferably provided in the vicinity of each of the left and right lateral surfaces, such as not further than 150 cm, such as not further than 100 cm or 50 cm from the left or right lateral surface. In other embodiments, the core member of the trailing edge insert may comprise at least two grooves provided in the top surface and at least two grooves provided in the bottom surface of the core member, preferably provided in the vicinity of each of the left and right lateral surfaces, such as not further than 150 cm, such as not further than 100 cm or 50 cm from the left or right lateral surface. The grooves may extend substantially parallel to each other and/or the grooves may extend substantially parallel to each of the left and right lateral surfaces. The core member of the trailing edge insert may comprise grooves that are arranged in an alternating pattern such that a groove in the top surface of the core member is followed by an adjacent groove in the bottom surface of the core member and vice versa, as seen in the width direction of the core member. In other embodiments, two grooves in the top surface are followed by two grooves in the bottom surface, or vice versa. It is preferred that the grooves do not intersect. In a preferred embodiment, the grooves are spaced not more than 100 cm from one of the respective lateral surfaces of the core member. According to another embodiment, the grooves extend throughout the entire length of the core member. All other features and/or embodiments discussed above with respect to the core member of the shear web may likewise apply to the core member as such.

As used herein, the term "planar shape" refers to a flat or plate-like shape in which the thickness of the planar member is significantly lower than its length and width, such as at least 10-times, at least 20-times or at least 50-times lower than its length and width.

### Description of the Invention

The invention is explained in detail below with reference to an embodiment shown in the drawings, in which
Fig. 1 shows a wind turbine,
Fig. 2 shows a schematic view of a wind turbine blade,
Fig. 3 shows a schematic view of a cross-section of a wind turbine blade,
Fig. 4 shows a known method for manufacturing a shear web,
Fig. 5 illustrates the use of a core member for manufacturing a shear web according to the present invention,
Fig. 6 is a perspective view of a core member for a shear web according to the present invention,
Fig. 7 is a schematic side view of a core member for a shear web according to one embodiment of the present invention, and
Fig. 8 is a schematic side view of a core member for a shear web according to another embodiment of the present invention.

### Detailed Description

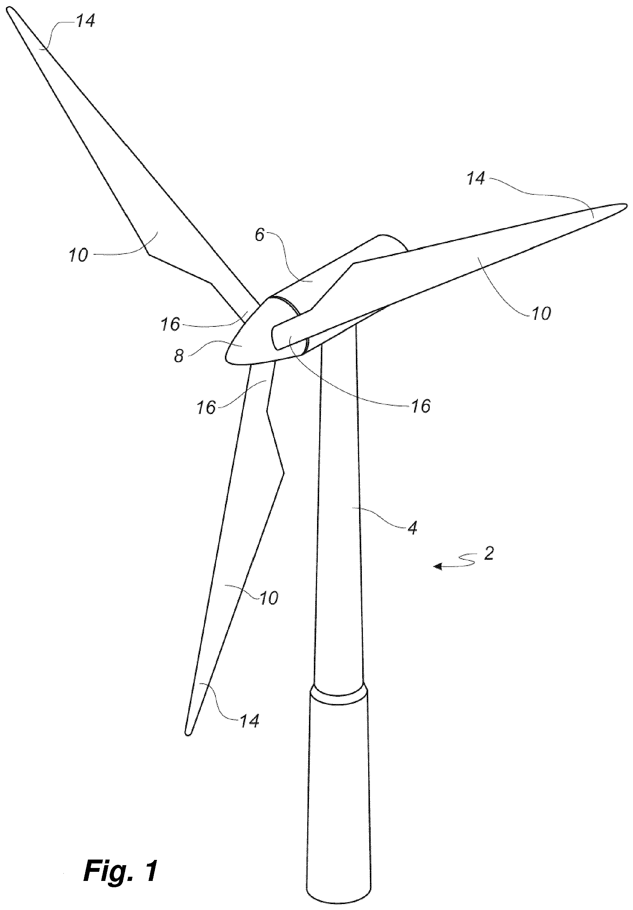

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8. The rotor has a radius denoted R.

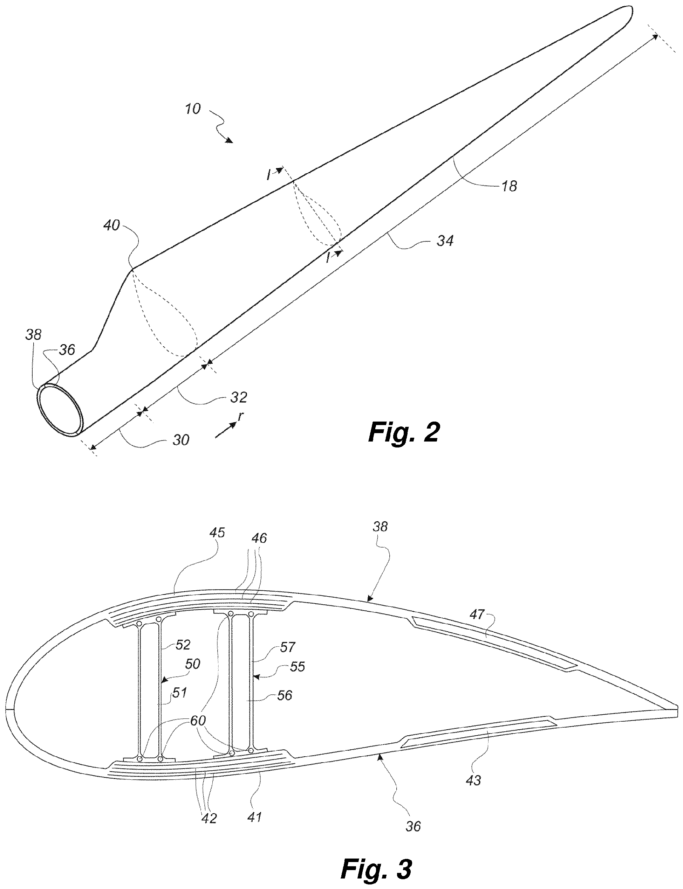

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 36 and a suction side shell part 38 that are glued to each other along bond lines at the leading edge 18 and the trailing edge of the blade 20.

Fig. 3 shows a schematic view of a cross section of the blade along the line I-I shown in Fig. 2. As previously mentioned, the blade 10 comprises a pressure side shell part 36 and a suction side shell part 38. The pressure side shell part 36 comprises a spar cap 41, also called a main laminate, which constitutes a load bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The pressure side shell part 38 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges. The shear web body comprises a sandwich core material 51, such as balsawood or foamed polymer, covered by a number of skin layers 52 made of a number of fibre layers. The second shear web 55 has a similar design with a shear web body and two web foot flanges, the shear web body comprising a sandwich core material 56 covered by a number of skin layers 57 made of a number of fibre layers. The sandwich core material 51, 56 of the two shear webs 50, 55 may be chamfered near the flanges in order to transfer loads from the webs 50, 55 to the main laminates 41, 45 without the risk of failure and fractures in the joints between the shear web body and web foot flange. However, such a design will normally lead to resin rich areas in the joint areas between the legs and the flanges. Further, such resin rich area may comprise burned resin due to high exothermic peeks during the curing process of the resin, which in turn may lead to mechanical weak points.

In order to compensate for this, a number of filler ropes 60 comprising glass fibres are normally arranged at these joint areas. Further, such ropes 60 will also facilitate transferring loads from the skin layers of the shear web body to the flanges. However, according to the invention, alternative constructional designs are possible.

The blade shells 36, 38 may comprise further fibre-reinforcement at the leading edge and the trailing edge. Typically, the shell parts 36, 38 are bonded to each other via glue flanges in which additional filler ropes may be used (not shown). Additionally, very long blades may comprise sectional parts with additional spar caps, which are connected via one or more additional shear webs.

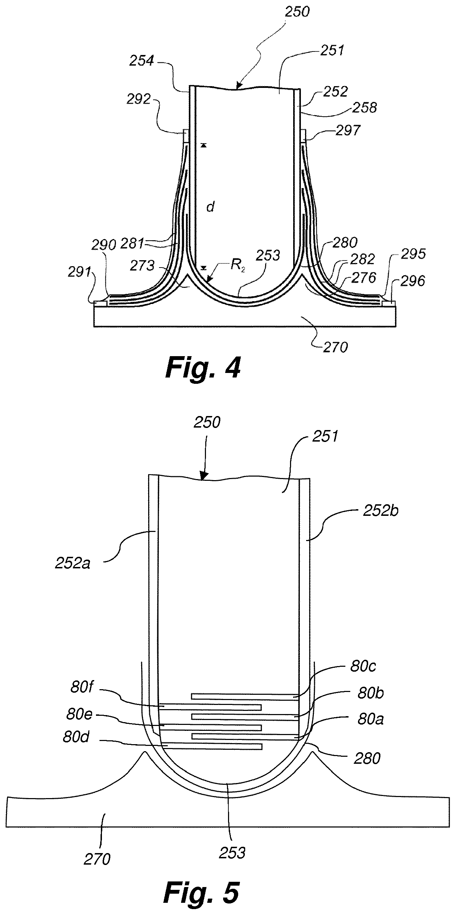

Fig. 4 illustrates a known method for manufacturing a shear web. A first pre-cured web foot flange 270 is laminated onto a first end 253 of a shear web body 250. The shear web body 250 comprises a sandwich core material 251, such as balsawood or foamed polymer, covered by a number of fibre skin layers 252. The shear web body 250 is an elongated body that - when mounted in the wind turbine blade shell - extends in the longitudinal direction of the wind turbine blade and may have a length of 30 metres or more. The shear web body comprises a first side 254 and a second side 258 as well as a first end 253 and a (not shown) second end.

A fibre layer 280 is arranged between the recess of the web foot flange 270 and the first end 253 of the shear web body 250. The fibre layer 280 is wrapped around the first end 253 of the shear web body 250 and extends along a part of the first side 254 of the shear web body and along a part of the second side 258 of the shear web body. Further, a number of first fibre layers 281 are arranged along the surface of the web foot flange 270 along the outer side of a first projection 273 and further along the first side 254 of the shear web body 250. Similarly, a number of second fibre layers 282 are arranged along the surface of the web foot flange 270 along the outer side of a second projection 276 and further along the second side 258 of the shear web body 250.

The first fibre layers 281 are covered by a first vacuum bag 290 and are sealed via a first sealant 291 to the web foot flange 270 and a second sealant 292 to the first side 254 of the shear web body 250. Similarly, the second fibre layers 280 are covered by a second vacuum bag 295 and are sealed via a first sealant 296 to the web foot flange 270 and a second sealant 297 to the second side 258 of the shear web body 250. The sealants 291, 292, 296, 297 may for instance be tacky tape or silicone. Thereby, a longitudinally extending mould cavity is formed between the first vacuum bag 290, the second vacuum bag 295, the web foot flange 270 and the shear web body 250. One end of the mould cavity is connected to a vacuum pump and the other end is connected to a resin source. Once the vacuum pump has evacuated the mould cavity, a valve to the resin source is opened and resin is injected into the mould cavity. Finally, the resin is cured so that a laminate bonding is formed between the web foot flange 270 and the first end 253 of the shear web body 250. The second web foot flange may be attached to the second end of the shear web body through a similar attachment method.

Fig. 5 illustrates a method of manufacturing a shear web for a wind turbine blade using a core member according to the present invention. The shear web body 250 comprises a core member 251, which is joined with a web foot flange 270 at a first end of the web body 250. The web body 250 comprises a first web skin 252a and a second web skin 252b, each web skin 252a, 252b comprising one or more fibre layers. The web body 250 further comprises a core member 251 sandwiched in between the first and second web skins 252a, 252b. The core member 251 comprises three grooves 80a, 80b, 80c provided in its top surface and three grooves 80d, 80e, 80f in its bottom surface to facilitate accurate and efficient fitting of the core member 251 with the web foot flange 270.

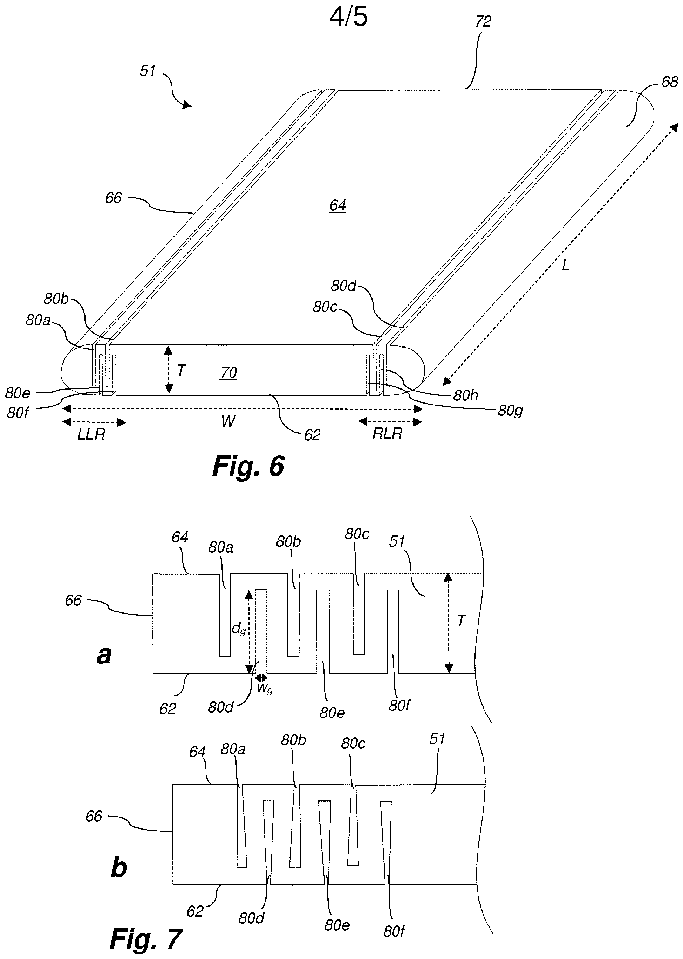

Fig. 6 is a perspective view of a core member according to the present invention. The core member 51 extends in a longitudinal direction L and has a planar lower surface 62, a planar upper surface 64 opposite to said lower surface 62 and left and right opposing lateral surfaces 66, 68 interconnecting said lower and upper surfaces 62, 64. In the embodiment shown in Fig. 6, the lateral surfaces 66, 68 are rounded surfaces. The core member 51 also comprises an anterior surface 70 and a posterior surface 72. The core member 51 has a thickness T, a length L and a width W.

As also illustrated in Fig. 6, the core member comprises a plurality of grooves 80a-d provided in the top surface 64 and a plurality of grooves 80e-h provided in the bottom surface 62 and extending in the longitudinal direction L of the core member 51 along its entire length. In the illustrated embodiment, the grooves 80a-h extend substantially parallel to each other and substantially parallel to each of the left and right lateral surfaces 66, 68. Also, the embodiment illustrated in Fig. 6 has the grooves are arranged in an alternating pattern such that a groove 80a in the top surface of the core member is followed by an adjacent groove 80e in the bottom surface of the core member 51 and vice versa, as seen in the width direction W of the core member 51.

Also, the grooves of Fig. 6 are provided as a first set of grooves 80a, 80b, 80e, 80f provided within a left lateral region LLR of the core member 51, which may extend up to 50 cm inwardly from the left lateral surface 66. Similarly, a second set of grooves 80c, 80d, 80g, 80h is provided within a right lateral region RLR of the core member 51 extending up to 50 cm inwardly from the right lateral surface 68.

Fig. 7 is a partial side view illustrating how the core member of the present invention may advantageously be fitted for example within a shear web mould or within similar equipment for manufacturing shear webs. In Fig. 7a, the left part of a core member 51 is shown it its uncompressed state. In the illustrated embodiment, the left lateral surface 66 is a substantially planar surface. The core member 51 comprises grooves 80a-f provided in its top surface 64 and bottom surface 62, respectively. Fig. 7a also illustrates the width w_{g} and the depth d_{g} of the grooves. Fig. 7b shows the core member 51 in a compressed state, e.g. when being fitted into a shear web mould. By means of the grooves 80a-f, the core member may be compressed and may advantageously be arranged within a web mould, despite possible inaccuracies or manufacturing tolerances of the width extension of the core member 51.

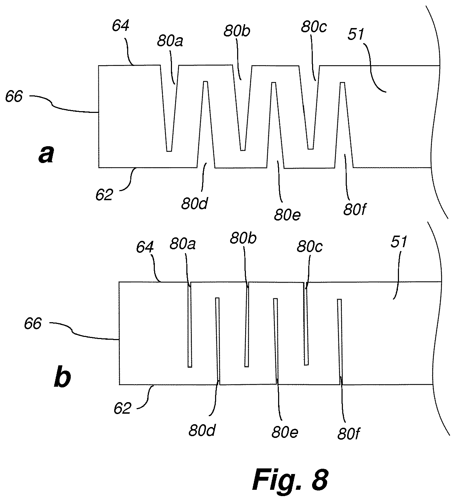

Fig. 8 illustrates another embodiment of a core member according to the present invention. In Fig. 8a, the left part of a core member 51 is shown it its uncompressed state, the core member 51 comprising grooves 80a-f provided in its top surface 64 and bottom surface 62, respectively, wherein the grooves have a substantially trapezoid cross-section. In Fig. 8b, the core member 51 is shown in a compressed state, in which the core member may be fitted even in slightly too narrow spaces thanks to the grooves.

The invention is not limited to the embodiments described herein, and may be modified or adapted without departing from the scope of the present invention.

### List of reference numerals

- 4: tower
- 6: nacelle
- 8: hub
- 10: blades
- 14: blade tip
- 16: blade root
- 18: leading edge
- 20: trailing edge
- 30: root region
- 32: transition region
- 34: airfoil region
- 36: pressure side shell part
- 38: suction side shell part
- 40: shoulder
- 41: spar cap
- 42: fibre layers
- 43: sandwich core material
- 45: spar cap
- 46: fibre layers
- 47: sandwich core material
- 50: first shear web
- 51: core member
- 52: skin layers
- 55: second shear web
- 56: sandwich core material of second shear web
- 57: skin layers of second shear web
- 60: filler ropes
- 62: lower surface of core
- 64: upper surface of core
- 66: left lateral surface
- 68: right lateral surface
- 70: anterior surface
- 72: posterior surface
- 74: left lateral region
- 76: right lateral region
- 80: grooves
- 250: shear web body
- 251: core member
- 252: fibre skin layers
- 253: first end of shear web body
- 254: first side of shear web body
- 258: second side of shear web body
- 270: first web foot flange
- 280: fibre layer(s)
- 281: fibre layer(s)
- 282: fibre layer(s)
- 290: forming tool / vacuum bag
- 291: sealant
- 292: sealant
- 295: forming tool / vacuum bag
- 296: sealant
- 297: sealant
- r: distance from hub
- R: rotor radius

## Claims

1. A shear web (50) for a wind turbine blade, the shear web (50) comprising a web body, wherein the web body comprises
a first web skin (252a) and a second web skin (252b), each web skin comprising one or more fibre layers,
a core member (51) sandwiched in between the first and second web skins,
the core member (51) extending in a longitudinal direction and having a lower surface (62), an upper surface (64) opposite to said lower surface (62) and left and right opposing lateral surfaces (66, 68) interconnecting said lower and upper surfaces,
wherein the core member (51) comprises a plurality of grooves (80) provided in the top surface and in the bottom surface and extending in the longitudinal direction of the core member (51).

2. A shear web (50) according to claim 1, wherein at least two grooves (80) are provided in the top surface and at least two grooves (80) are provided in the bottom surface of the core member (51).

3. A shear web (50) according to claims 1 or 2, wherein the grooves (80) extend substantially parallel to each other, wherein the grooves (80) extend substantially parallel to each of the left and right lateral surfaces (66, 68).

4. A shear web (50) according to any of the preceding claims, wherein the grooves (80) are arranged in an alternating pattern such that a groove in the top surface of the core member (51) is followed by an adjacent groove in the bottom surface of the core member (51) and vice versa, as seen in the width direction of the core member (51), e.g. wherein the grooves (80) do not intersect.

5. A shear web (50) according to any of the preceding claims, wherein the grooves (80) are spaced not more than 50 cm from one of the respective lateral surfaces of the core member (51).

6. A shear web (50) according to any of the preceding claims, wherein the grooves (80) extend throughout the entire length of the core member (51).

7. A shear web (50) according to any of the preceding claims, wherein the grooves (80) have a depth of at least 50%, preferably at least 80%, of the thickness of the core member (51).

8. A shear web (50) according to any of the preceding claims, wherein the grooves (80) are provided as a first set of grooves (80), wherein the first set of grooves (80) is provided within a left lateral region of the core member (51) extending up to 100 cm inwardly from the left lateral surface, alternatively
wherein the grooves (80) are provided as a first and a second set of grooves (80), wherein the second set of grooves (80) is provided within a right lateral region of the core member (51) extending up to 100 cm inwardly from the right lateral surface.

9. A shear web (50) according to claim 8, wherein each of the left and right lateral regions comprises 2-10 grooves (80), preferably 2-5 grooves (80), and/or
wherein the grooves (80) have a width of between 1 and 10 mm, preferably between 1 and 5 mm.

10. A shear web (50) according to any of the preceding claims, wherein the core member (51) has a substantially planar shape.

11. A shear web (50) according to any of the preceding claims, wherein the left and right opposing lateral surfaces are curved surfaces.

12. A shear web (50) according to any of the preceding claims, wherein the core member (51) comprises or consists of a foam material, such as foamed polymer.

13. A shear web (50) according to any of the preceding claims, wherein the grooves have a substantially rectangular, trapezoid or triangular cross-section.

14. A wind turbine blade comprising a shear web (50) according to any of the preceding claims.

15. A method of manufacturing a shear web (50) for a wind turbine blade, the shear web (50) having a web body, wherein the method comprises the steps of:
a) providing a web mould part having a moulding surface,
b) arranging one or more fibre layers on the moulding surface for forming a first web skin,
c) arranging a core member (51) on top of the one or more fibre layers,
the core member (51) extending in a longitudinal direction and having a lower surface (62), an upper surface (64) opposite to said lower surface (62) and left and right opposing lateral surfaces interconnecting said lower and upper surfaces,
wherein the core member (51) comprises a plurality of grooves (80) provided in the top surface and in the bottom surface and extending in the longitudinal direction of the core member (51),
d) arranging one or more fibre layers on top of the core member (51) for forming a second web skin,
e) supplying resin to the mould part to the fibre layers and the core member, and
e) curing or hardening the resin to form the shear web (50).

16. A core member (51) for a shear web (50) or a trailing edge insert of a wind turbine blade,
the core member (51) extending in a longitudinal direction and having a lower surface, an upper surface opposite to said lower surface and left and right opposing lateral surfaces interconnecting said lower and upper surfaces,
wherein the core member (51) comprises a plurality of grooves (80) provided in the top surface and in the bottom surface and extending in the longitudinal direction of the core member.
